# EUROPÄISCHE PATENTSCHRIFT

(11) **EP 1 783 102 B1**
(45) Veröffentlichungstag und Bekanntmachung des Hinweises auf die Patenterteilung: **01.09.2010**
(21) Anmeldenummer: 06021392.3
(22) Anmeldetag: 12.10.2006
(51) Int. Cl.: C02F 3/04, C02F 3/10

(54) **Verfahren zur mikrobiologischen aeroben Abwasserbehandlung**
Process for the aerobic microbiologic wastewater treatment
Procédé d'épuration microbiologique aérobie des eaux usées

(30) Priorität: 28.10.2005 DE 102005051711
(43) Veröffentlichungstag der Anmeldung: 09.05.2007
(73) Patentinhaber: DAS Environmental Expert GmbH, 01217 Dresden (DE)
(72) Erfinder: Haldenwang, Lutz, Dr., 01445 Radebeul (DE); Kotowski, Stephan, Dr., 63500 Seligenstadt (DE); Ilgen, Kerstin, 01705 Freital (DE); Fischer, Jörg, 01738 Colmnitz (DE)
(74) Vertreter: Hofmann, Klaus

(56) Entgegenhaltungen:
- EP-A1- 0 667 319
- EP-A1- 1 153 891
- DE-A1- 3 631 817
- GB-A- 1 496 178

## Beschreibung

Die Erfindung betrifft ein Verfahren zur mikrobiologischen aeroben Behandlung von Abwasser aus Kommunen, der Industrie, der Landwirtschaft und Entsorgungsbetrieben. Mit ihm können sowohl die CSB- und BSB-Belastung als auch die Ammoniumstickstoff-Konzentration eines Abwassers vor Abgabe in die Kanalisation, vor Einleitung in den Vorfluter oder vor einer Mehrfachnutzung abgebaut werden.

Die überwiegende Anzahl der organischen Verbindungen wird von natürlich vorkommenden aeroben Mikroorganismen unter Aufnahme von Sauerstoff vollständig in Kohlendioxid und Wasser sowie Zellsubstanz umgewandelt. Da dieser Prozess naturnah verläuft und mit verhältnismäßig wenig Aufwand durchgeführt werden kann, wurden in den letzten zwei Jahrzehnten verstärkt Technologien für die aerobe biologische Abwasserbehandlung entwickelt. Die höchsten Raumabbauleistungen erreichen moderne aerobe biologische Verfahren, welche mit speziellen kleinkörnigen Trägermaterialien für den Aufwuchs der Biomasse in hoher Konzentration arbeiten. Im krassen Gegensatz zu der geringen Löslichkeit von Sauerstoff in Wasser, welche bei 15°C nur 10 mg/l beträgt, steht der sehr hohe Sauerstoffbedarf von Abwässern aus der Industrie und anderen Bereichen, welcher in Abhängigkeit von der Branche und vom Verschmutzungsgrad häufig im Bereich zwischen Tausend und Zehntausend Milligramm pro Liter liegt.

In nahezu allen aeroben Technologien zur Abwasserbehandlung werden die Mikroorganismen, welche entweder im Wasser frei suspendiert oder an einem Aufwuchsträgermaterial immobilisiert vorliegen, innerhalb eines geschlossenen Wasserkörpers gehalten. Deshalb muss die kontinuierlich notwendige Nachlieferung von Sauerstoff gegen den Druck der Wassersäule erfolgen und erfordert einen großen Aufwand. Zusätzlich macht sich ungünstig bemerkbar, dass der Sauerstoffgehalt des Wassers mit dem Anstieg der Temperatur noch weiter abnimmt. Bei einer Temperatur zwischen 30 und 40°C, wie sie in der Industrie häufig vorkommt, besteht ein besonders großer Widerspruch zwischen der in diesem Bereich optimalen Bioaktivität und der Sauerstoffverfügbarkeit. Die genannten Zusammenhänge führen insbesondere bei der Behandlung organisch hoch belasteter und biologisch gut abbaubarer Wässer zu einem steigenden Aufwand bei der Reaktorgestaltung und zu hohen Kosten für die kontinuierliche Belüftung. In vielen Technologien wird die Abbauleistung durch eine nicht ausreichende Belüftung bzw. einen Sauerstoffmangel der Mikroorganismen begrenzt.

Unter gleichen Bedingungen ist der Sauerstoffgehalt der Luft etwa 30-mal größer als der des Wassers. Weil darüber hinaus der Transport des Sauerstoffs in der Gasphase wesentlich schneller erfolgt als in der Flüssigphase, ist es günstig, die an einem Aufwuchsträgermaterial immobilisierten Mikroorganismen nicht innerhalb eines geschlossenen Wasserkörpers zu halten sondern den für den aeroben biologischen Prozess notwendigen Sauerstoff in Form von Umgebungsluft direkt an die nur mit einem Flüssigkeitsfilm umgebene Biomasse heranzuführen. Dieses Prinzip wird sowohl mit dem bereits lange bekannten Tropfkörper als auch mit dem jüngeren Rieselstrom-Reaktor realisiert. In beiden Technologien liegt das Trägermaterial nicht innerhalb eines geschlossenen Wasserkörpers vor, sondern wird von dem zu behandelnden Abwasser überrieselt.

Bei einem Tropfkörper-Verfahren wird das zu behandelnde Abwasser über eine Schüttung aus Füllkörpern gegeben, in welche durch die dabei auftretende natürliche Sogwirkung Außenluft eindringt. Tropfkörper werden mit einer verhältnismäßig kleinen Abbauleistung ohne Regenerierung des Trägermaterials betrieben. Der Porenraum zwischen den einzelnen Elementen sowie innerhalb der Füllkörper ist so groß, dass sich Teile des Biorasens selbst ablösen und eine niedrige Biomassekonzentration aufrechterhalten wird. Nach langjährigen Erfahrungen werden heute im internationalen Maßstab unregelmäßige Füllkörper mit einer Einzelgröße zwischen 40 und 80 mm oder regelmäßig geformte Kunststoff-Füllelemente mit einem Hohlraumvolumen bis zu 95% (DE 32 05 299 A1) eingesetzt. Der Vorteil des Tropfkörper-Verfahrens besteht in der natürlichen Belüftung, welche keinen zusätzlichen Aufwand erfordert. Der entscheidende Nachteil ergibt sich jedoch aus der im Verhältnis zu modernen Bioreaktoren geringen Biomassekonzentration und der daraus resultierenden geringen Abbauleistung bzw. dem großen Anlagenvolumen. Ein weiterer Nachteil besteht darin, dass keine definierte Regenerierung des Trägermaterials stattfindet, sondern dass sich die Biomasse ständig selbst ablöst und damit kontinuierlich ins Reinwasser gelangt.

In DE 31 23 155 A1 wird ein Verfahren zur anaeroben oder aeroben biologischen Reinigung von Abwasser in einer Tropfkörperanlage beschrieben. Zur Regenerierung wird der Reaktionsraum ganz oder teilweise mit Wasser gefüllt. Am Boden des Behälters kann zusätzlich Gas in den eingestauten Bereich zugegeben werden. Die durch die Anhebung des Wasserstandes erzwungene Bewegung der Füllkörper soll zu einem Abrieb der Biomasse führen. Das zusätzliche Einblasen von Luft in den eingestauten Trägermaterialbereich soll zu einer Verwirbelung der eingestauten Träger führen. Nachteilig ist dabei, dass der Reaktionsbehälter auf die teilweise Füllung mit Spülwasser ausgelegt werden muss. Es sind ein zusätzlicher Behälter und zusätzliche Einrichtungen für die Spülwasserbereitstellung, Zugabe in den Reaktionsbehälter sowie Entnahme aus dem Reaktionsbehälter mit zusätzlichen Kosten nötig. Das zugegebene Gas muss mit einem Druck größer als der Druck der Wassersäule im Reaktionsbehälter bereitgestellt werden.

Zur Regulierung der Zuflussmenge wird in DE 195 11 159 C1 eine Kreislaufführung aus dem Sumpf eines Wirbelbettreaktors beschrieben.

GB 1 469 178 A beschreibt ein Verfahren zur biologischen Reinigung von Abwasser, bei dem in einem zweistufigen Prozess die Begasung der ersten Prozessstufe in einem Tropfkörperturm mit der Abluft aus der zweiten Prozessstufe aus einem Belebungsbecken erfolgt.

In EP 1 153 891 A1 wird ein Verfahren zur biologischen und/oder physikalischen Elimination unerwünschter Wasserinhaltsstoffe aus Wasser mittels eines gefluteten Biofilmreaktors beschrieben. Der Reaktor besitzt eine spezielle Bodenkonstruktion, die denselben auf seine Grundfläche bezogen segmentweise mit Wasser und Luft zur Rückspülung beaufschlagt.

Bei der Rieselstrom-Technologie ist die Trägermaterialschüttung ebenfalls nicht eingestaut und wird von dem zu behandelnden Abwasser durchrieselt. Im Gegensatz zum Tropfkörper wird nach EP 0 667 319 B1 mit einer zusätzlichen Zwangsbelüftung und einem Aufwuchsträgermaterial mit einer Korngröße kleiner als 10mm gearbeitet. Der Vorteil dieses Verfahrens gegenüber der Tropfkörper-Technologie besteht darin, dass mit der größeren Oberfläche des Trägermaterials und der zusätzlichen künstlichen Belüftung eine höhere Mikroorganismen-Konzentration mit einer größeren Raumabbauleistung eingestellt werden kann.

Da der biologische Abbau der im Abwasser gelösten Verbindungen zu Kohlendioxid und Wasser vom Wachstum der Mikroorganismen direkt abhängig ist, bildet sich proportional zur Bioaktivität kontinuierlich überschüssige Biomasse. Die entscheidende Schwierigkeit dieses Verfahrens ist deshalb der Umstand, dass bei einer Schüttung einer solch geringen Korngröße die Räume zwischen den einzelnen Elementen klein sind und in kurzer Zeit mit nachwachsender Biomasse und im Abwasser enthaltenen feinen Feststoffteilchen ausgefüllt werden. Dadurch wird der freie Durchgang des Abwassers von oben nach unten und der für die Veratmung der Schadstoffe notwendigen Luft im Gegenstrom behindert und die biologische Abbauleistung sinkt signifikant ab.

Nach EP 0 667 319 B1 soll der stabile Betrieb des Verfahrens dadurch gewährleistet werden, dass das Aufwuchsträgermaterial kontinuierlich von einem künstlich erzeugten Luftstrom von mindestens 500 m³/m² x h durchströmt wird. Durch diesen Luftstrom soll einerseits der Verschluss der Porenräume durch entstehende Biomasse verzögert oder vollständig verhindert und andererseits das Rohwasser innerhalb des Trägermaterials in Form eines Aerosols gleichmäßig verteilt werden.

Aus der beschriebenen Verfahrensweise resultieren im praktischen Betrieb entscheidende Nachteile. Überschüssige Biomasse wird ständig abgerieben und gelangt ähnlich wie beim Tropfkörper-Verfahren kontinuierlich in den Ablauf. Dieser Umstand führt zu einer Erhöhung der organischen Fracht im Reinwasser und verhindert einen Einsatz des Verfahrens vor Direkteinleitung in das Gewässer oder vor einer Mehrfachnutzung wegen der in diesen Fällen geforderten niedrigen CSB-Konzentration des Reinwassers.

Oftmals muss die Abluft eines biologischen Prozesses in einer nachgeschalteten Anlage behandelt werden. Der Aufwand für eine derartige Anlage ist von der Abluftmenge direkt abhängig. Darüber hinaus entstehen wegen des geringen Hohlraumes zwischen den einzelnen mit Biomasse bewachsenen Trägern hohe Energiekosten für die Gewährleistung des genannten Luftstromes. Gemäß der stöchiometrischen Verhältnisse reicht auch unter Bedingungen einer sehr hohen Bioaktivität bereits eine Luftmenge aus, welche nur etwa ein Fünfzigstel des angegebenen Wertes von > 500 m³/m² x h beträgt. Es ist deshalb sehr ungünstig, kontinuierlich mit einem derart großen Luftstrom zu arbeiten.

Die Praxis zeigt, dass das in Abhängigkeit von der organischen Fracht des Abwassers auftretende Verstopfen der Porenräume mit nachwachsender Biomasse durch einem derartigen Luftstrom stellenweise verzögert aber nicht dauerhaft verhindert werden kann. In vielen Anwendungsfällen entstehen unter den beschriebenen Bedingungen die aus der Festbettfilter-Technologie bekannten Kurzschlussströmungen. Dabei bilden sich bevorzugte Wege für Luft und Wasser heraus, während der übrige Teil des Trägermaterialbettes nur ungenügend versorgt wird und einen starken Abfall der Raumabbauleistung des Verfahrens bewirkt.

Außerdem soll mit dem oben genannten Luftstrom von mindestens 500 m³/m² x h das Rohwasser innerhalb des Trägermaterials in Form eines Aerosols gleichmäßig verteilt werden. Da Konzentration und Zusammensetzung der verschiedenen vorkommenden Abwässer in sehr weiten Bereichen variieren und deshalb mit sehr unterschiedlichen Zulaufgeschwindigkeiten gearbeitet werden muss, ist es jedoch sehr schwierig, mit diesem Verfahrensschritt unter den verschiedenen Bedingungen eine optimale Verteilung des Rohwassers zu gewährleisten.

Ein weiterer Nachteil ist der Umstand, dass zahlreiche Abwässer, insbesondere aus Industrie und Entsorgungswirtschaft, gesundheitsgefährdende Stoffe enthalten, welche nicht in Form eines Aerosols in die Umgebung austreten dürfen. Deshalb ist für die Durchführung dieses Verfahrens in der Mehrzahl der Anwendungsfälle ein zusätzlicher Tropfenabscheider nach der Gasaustrittsöffnung notwendig.

Moderne Bioreaktoren, welche mit einer nicht unter Wasser liegenden Schüttung aus einem kleinkörnigem Aufwuchsträgermaterial arbeiten, können die kontinuierlich notwendige Sauerstoffversorgung der Mikroorganismen im Gegensatz zum Stand der Technik auf einfache Weise und kostengünstig realisieren. Mit steigender Biofilmdicke wächst jedoch der freie Raum innerhalb des Trägermaterialbettes mit Biomasse und abfiltrierten feinen Feststoffen zu und die unteren Zellschichten des Biofilms werden zunehmend schlechter mit Nährstoffen und Sauerstoff versorgt. In der Folge entsteht eine massive Behinderung des freien Durchgangs des abwärts rieselnden Abwassers und der aufströmenden Luft.

Der vorliegenden Erfindung liegt das Problem zugrunde, dass sich Kurzschlussströmungen und Wassernester ausbilden, welche den freien Stoffübergang innerhalb des gesamten Reaktionsraumes behindern und zu einem Abfall der Raumabbauleistung sowie zu einer Instabilität des Verfahrens führen.

Aufgabe der Erfindung ist es, ein Verfahren zu entwickeln, mit dem für nicht eingestaute Bioreaktoren mit körnigem Trägermaterial ein kontinuierlicher Betrieb mit einer hohen Raumabbauleistung, niedrigen Betriebskosten und geringen Bedienaufwand gewährleistet wird. Dafür ist es notwendig, einen ungehinderten Kontakt zwischen trägerfixierter Mikroorganismen, Abwasser und Luftsauerstoff stabil aufrecht zu halten. Eine Verstopfung der Trägermaterialschüttung sowie eine Belastung des Reinwassers durch überschüssige Biomasse sollen sicher ausgeschlossen werden.

Diese Aufgabe wird erfindungsgemäß mit dem Verfahrensanspruch 1 gelöst. Ausgestaltende Merkmale sind in den Unteransprüchen 2 bis 9 beschrieben.

Das zu behandelnde Abwasser wird im oberen Teil des Reaktionsraumes verteilt und durchrieselt von oben nach unten eine nicht unter Wasser liegende Schüttung aus einem kleinkörnigen Aufwuchsträgermaterial für Mikroorganismen mit einer Dichte < 0,1 g/cm³ und einer Korngröße < 15 mm. Wegen seines geringen Gewichtes liegt das Trägermaterial in Form eines unverändert lockeren Bettes vor und bildet damit die Voraussetzung für den optimalen Stoffübergang zwischen Mikroorganismen sowie Abwasser und Luft im Gegenstrom.

Nach der Passage des Trägermaterials wird das Abwasser in einer Vorlage gefasst und zum Teil im Kreislauf erneut von oben nach unten über die Trägermaterialschüttung gegeben. Auf diese Weise beträgt die insgesamt herab rieselnde Wassermenge ein Vielfaches der zulaufenden Menge unbehandelten Abwassers und bewirkt eine Verteilung innerhalb der biologisch aktiven Trägermaterialschüttung. Damit wird gewährleistet, dass unabhängig von der Art des Rohwassers und den jeweiligen Bedingungen eine optimale Nutzung des gesamten Reaktionsraumes erfolgt. Das Verhältnis zwischen dem Abwasserzulauf und dem Abwasserkreislauf ist von der Konzentration und der biologischen Abbaubarkeit des Rohwassers sowie dem Reinigungsziel abhängig. Es wird so eingestellt, dass die Geschwindigkeit des rieselnden Abwassers im Bereich zwischen 3 und 15 Kubikmeter pro Stunde und Quadratmeter Reaktorquerschnitt liegt.

Das behandelte Abwasser wird im kontinuierlichen Betrieb mit der gleichen Geschwindigkeit mit der das unbehandelte Abwasser zugegeben wird aus dem System abgezogen.

Die Trägermaterialschüttung liegt auf einem Siebboden oder schwimmt auf der Oberfläche eines Wasserkörpers im unteren Teil des drucklosen Reaktionsraumes und wird in Gegenrichtung zum abwärts rieselnden Abwasser mit einem künstlich erzeugten Luftstrom < 100 m³/m² x h durchströmt. Dieser wird unterhalb oder im unteren Bereich der Schüttung zugeführt und tritt durch eine entsprechende Öffnung im oberen Teil des nahezu drucklosen Reaktionsraumes frei aus. Nahezu drucklos bedeutet dabei, dass der Reaktionsraum durch eine Öffnung mit der Umgebung verbunden ist und sich mit der aufströmenden Luft innerhalb der locker liegenden Schüttung nur ein sehr geringer Druck aufbaut. Dabei ist es sehr vorteilhaft, dass der für die Abwasserbehandlung kontinuierlich notwendige Luftstrom nicht gegen den Druck der Wassersäule erfolgen muss. Deshalb reicht bereits ein Luftstrom im Bereich zwischen 20 und 100 m³/m² x h und ein dementsprechend sehr niedriger Energieverbrauch vollständig aus, um die Biomasse mit der stöchiometrisch notwendigen Sauerstoffmenge zu versorgen. Bei Bedarf kann dieser geringe Luftstrom auf einfache Weise gefasst und einer Abluftbehandlung zugeführt werden. Es ist kein Tropfenabscheider zur Rückhaltung von Aerosolen notwendig.

Zur Gewährleistung eines stabilen Betriebes wird regelmäßig überschüssige Biomasse von der Oberfläche und aus den Zwischenräumen des Trägermaterials abgerieben und aus dem System entnommen, ehe eine Behinderung der biologischen Aktivität eintritt. Dazu wird die Trägermaterialschüttung im Abstand von mehreren Stunden bis mehreren Tagen regeneriert. Dies geschieht, indem die Trägermaterialschüttung in Gegenrichtung zum ununterbrochen rieselnden Abwasser-Kreislaufstrom mit einem künstlich erzeugten Starkluftstrom von mehr als 150 m³/m² x h und einem Druck von mehr als 20 mbar pro Meter Höhe der Schüttung von unten nach oben derart durchströmt und soweit verwirbelt wird, bis ein Teil der zwischen den einzelnen Trägerteilchen anhaftenden Biomasse sowie der aus dem Abwasser abfiltrierten feinen Feststoffe abgerieben wird. Da der für die Regenerierung notwendige Starkluftstrom nicht gegen den Druck der Wassersäule erfolgen muss und das Trägermaterial ein sehr niedriges spezifisches Gewicht besitzt, reicht bereits eine Stärke im Bereich zwischen 150 und 1.000 m³/m² x h und ein Druck zwischen 20 und 200 mbar pro Meter Trägermaterialschüttung für eine optimale Regenerierung vollständig aus. Weitere wesentliche Vorteile bestehen darin, dass kein zusätzliches Spülwasser gesammelt und eingesetzt werden muss und dass die anfallende Menge Regenerat verhältnismäßig gering ist.

Anschließend werden der Starkluftstrom und der Wasserkreislauf unterbrochen bis das aus Abwasser und abgeriebener Biomasse bestehende Regenerat aus der Trägermaterialschüttung abgeflossen ist sowie in der Vorlage aufgefangen und aus dem System entfernt wurde. Nach dem Abzug des Regenerates wird das Verfahren durch Zuschalten des Abwasserzulaufs, der Kreislaufführung und der Gegenstrombelüftung wieder in Betrieb genommen.

Es ist möglich, die geforderten Zielwerte im Ablauf des Systems bereits unmittelbar nach Wiederinbetriebnahme zu erreichen. Für diesen Zweck wird die Vorlage nicht mit Rohabwasser sondern mit behandeltem Abwasser, welches während der kontinuierlichen Abwasserbehandlung gesammelt wurde, aufgefüllt. Dieser Verfahrensschritt hat darüber hinaus den Vorteil, dass das Füllen der Vorlage nicht von der Geschwindigkeit des jeweiligen Abwasserzulaufs abhängig ist sondern nur wenige Minuten dauert.

Die Regenerierung wird in Abhängigkeit von der Art des Abwassers und der daraus resultierenden Geschwindigkeit des Biomassewachstums im Abstand mehrerer Stunden bis mehrerer Wochen durchgeführt und besteht jeweils aus ein oder mehreren Starkluftstößen. Bei einer Anlage, welche mit mehreren Bioreaktoren arbeitet, ist es sinnvoll, die Regenerierung zeitlich versetzt zwischen den einzelnen Reaktoren durchzuführen. Der Regenerierbetrieb kann vollständig automatisiert werden und wird dabei entweder durch eine Zeitschaltung oder in Abhängigkeit von dem mit dem Wachstum der Mikroorganismen und der Abtrennung feiner Feststoffe innerhalb der Trägermaterialschüttung zunehmenden Druck ausgelöst. Diese Einstellung erfolgt nach Inbetriebnahme einer neu errichteten Anlage vor Ort, indem entweder die Zeit zwischen zwei Regenerierungen festgelegt oder die kritische Druckdifferenz unterhalb der Trägermaterialschüttung ermittelt wird.

Der Vorteil der Erfindung besteht insbesondere darin, dass durch den ungehinderten Kontakt und die kurzen Stoffübergangswege zwischen dem optimal verteilten Abwasser, Mikroorganismen in hoher Konzentration und Sauerstoff im Überschuss eine sehr hohe Bioaktivität erreicht wird und dass die daraus resultierende sehr hohe Raumabbauleistung durch eine regelmäßige Regenerierung ohne zusätzlichen Aufwand stabil aufrecht erhalten wird. Aufgrund des geringen Anlagenvolumens und der einfachen technischen Gestaltung sind die Investitionskosten einer Anlage zur Durchführung des beschriebenen Verfahrens verhältnismäßig niedrig. Wegen des niedrigen Energiebedarfs der einzelnen Verfahrensschritte sind sowohl die laufenden Betriebskosten als auch der Wartungsaufwand im Vergleich zu anderen Technologien sehr gering.

Wegen des hohen Aufwandes zur Stabilisierung von pH-Wert und Temperatur, der sehr langen Inbetriebnahmephase und dem Restgehaltes organischer Verbindungen im Reinwasser besitzen anaerobe biologische Verfahren entscheidende Nachteile gegenüber dem aeroben Prozess. Nach dem Stand der Technik werden Abwässer mit einer CSB-Konzentration größer als 3.000 mg/l wegen ihres hohen Sauerstoffbedarfs trotzdem vorzugsweise ohne Belüftung mit anaeroben Verfahren behandelt. Mit der vorliegenden Erfindung ist es möglich, Abwässer mit einer CSB-Konzentration, welche um ein Vielfaches über diesen Wert liegt, biologisch aerob zu behandeln.

Nachfolgend wird die Erfindung an einem Ausführungsbeispiel näher erläutert.

In einem Unternehmen werden Folien und Laminate für die Beschichtung von Möbeln und Innenausbauten hergestellt, indem Spezialpapiere mit wasserbasierten Harz-Lacksystemen imprägniert und lackiert werden. Bei der Produktion von über 100 unterschiedlichen Oberflächenausführungen fällt eine Abwassermenge zwischen 0,5 und 8 m³/h mit einer CSB-Konzentration zwischen 5.000 und 11.500 mg/l CSB an. Nach Mischung in einem vorhandenen Misch- und Ausgleichsbehälter liegt die anfallende Abwassermenge bei 50 m³/d bzw. 2.1 m³/h mit einer Konzentration im Bereich von 6.500 mg/l CSB. Das Abwasser besitzt eine für den biologischen Abbau günstige Temperatur von 30°C und enthält zusätzlich zu der gelösten organischen Fracht 450 mg/l abfiltrierbare Stoffe mit einer Größe < 2 mm. Die CSB-Konzentration soll vor Einleitung in die städtische Kanalisation auf einen Restgehalt von < 800 mg/l CSB abgebaut werden.

Vorversuche haben ergeben, dass das Abwasser mit mittlerer Geschwindigkeit bis auf die geforderte Restkonzentration biologisch abgebaut werden kann.

Eine Analyse des gemischten Rohwassers hat ergeben, dass das CSB/BSB5-Verhältnis 1,65 beträgt. Das bedeutet, dass für die Behandlung dieses hoch konzentrierten Abwassers mindestens 3.455 mg/l Sauerstoff bereitgestellt werden müssen. Dies entspricht der 449-fachen Menge der bei 30°C im Wasser gelösten Sauerstoffkonzentration von 7,7 mg/l.

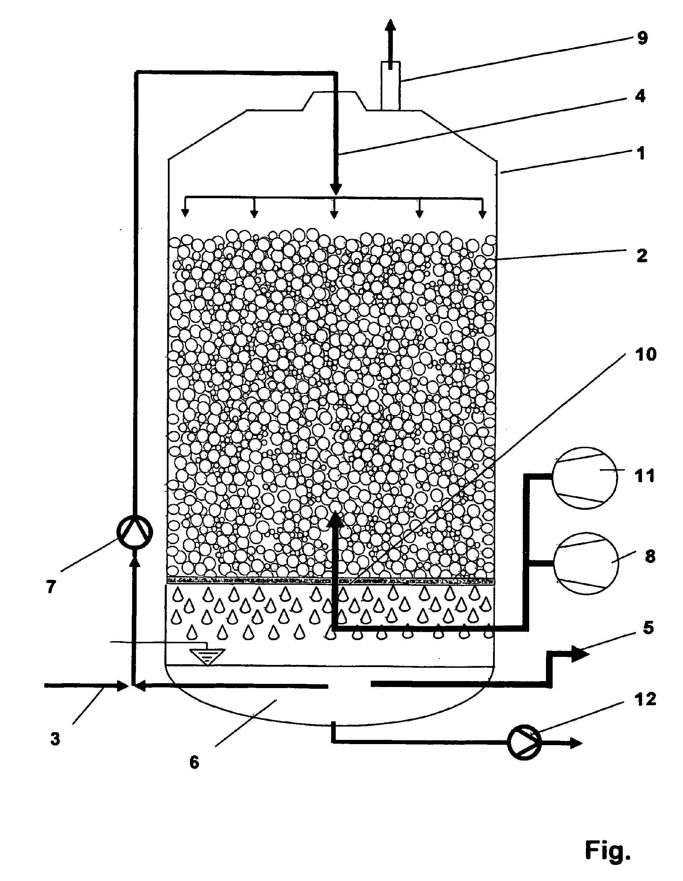

Die Abwasserbehandlung erfolgt, wie in der Abbildung dargestellt, in einem zylinderförmigen Reaktor 1 aus Polyethylen mit einem Durchmesser von 3 m und einer Höhe von 8 m. Polyethylen kann verwendet werden, weil der Reaktor 1 nur im Bodenbereich mit Wasser gefüllt ist und bietet gegenüber Stahl große Vorteile in Bezug auf Investitionskosten, Verarbeitung und Wartungsaufwand. Als Aufwuchsträgermaterial 2 für die Biomasse wird eine Schüttung aus kugelförmigen Schaumpolystyren mit einer Dichte von 0,03 g/cm³ und einer Korngröße im Bereich zwischen 5 und 10mm sowie einer porösen Oberfläche verwendet. Das Rohwasser 3 wird am Kopf des Reaktors 1 zusammen mit dem im Kreislauf geführten Wasser zugeführt und oberhalb der Trägermaterialschüttung über eine Verteilung 4 in Form mehrerer Prallplatten gleichmäßig verteilt.

Ein Ablauf 5 nach dem Überlaufprinzip im Bodenbereich des Reaktors 1 gewährleistet, dass das behandelte Abwasser mit exakt der gleichen Geschwindigkeit aus dem Reaktor 1 abläuft, mit welcher das unbehandelte Rohwasser 3 zugegeben wird. Das Wasservolumen, welches auf diese Weise in Abhängigkeit von der Höhe des freien Überlaufs am Boden des Reaktors 1 gehalten wird, dient als Vorlage 6 für eine Kreislaufpumpe 7 zur Kreislaufführung des Rohwassers 3. Die aus Rohwasserzulauf und mehrfacher Kreislaufführung resultierende Geschwindigkeit innerhalb des Reaktionsraums beträgt 6 m/h (6 Kubikmeter Wasser pro Quadratmeter Filterquerschnittsfläche). Im Gegenstrom zum abwärts rieselnden Abwasser wird mit einem Ventilator 8 kontinuierlich ein Luftstrom von 30 Kubikmeter Umgebungsluft pro Quadratmeter Filterquerschnittsfläche zugegeben. Nach Passage des Aufwuchsträgermaterials 2 tritt die Luft über einen Luftaustritt 9 am Kopf des Reaktors 1 aus und wird der betriebseigenen Abluftbehandlungsanlage zugeführt.

Diese Biomasse wächst in Form eines dichten Biofilms auf der Oberfläche und in den Zwischenräumen des Aufwuchsträgermaterials 2 und besteht aus einer Vielzahl unterschiedlicher Bakterien und anderer Mikroorganismen in Verbindung mit stabilisierenden extrazellulären Verbindungen. Mit steigender Biofilmdicke wächst der freie Raum zwischen den einzelnen Trägermaterialteilchen mit Biomasse sowie abfiltrierten feinen Feststoffen zu und die unteren Zellschichten des Biofilms werden zunehmend schlechter mit Nährstoffen und Sauerstoff versorgt. Um einen Abfall der Raumabbauleistung des Bioreaktors durch die Behinderung des freien Durchgangs des abwärts rieselnden Abwassers und der nach oben strömenden Luft zu vermeiden, erfolgt aller 36 Stunden eine automatische Regenerierung des Aufwuchsträgermaterials 2. Dabei wird nach Abschalten des Abwasserzulaufs das auf einem Siebboden 10 liegende Trägermaterial 2 12 mal hintereinander durch einen mit einem Gebläse 11 erzeugten Starkluftstrom mit einer Geschwindigkeit von 1.200 m³ x h und einem Druck von 200 mbar von unten nach oben durchströmt, so dass etwa 20% der insgesamt im Aufwuchsträgermaterial 2 vorhandenen Biomasse abgerieben werden. Die Zugabe von zusätzlichem Spülwasser ist nicht notwendig.

Nach Abschalten des Kreislaufstroms fließt das Abwasser mit der abgeriebenen Biomasse aus der Trägermaterialschüttung in die Vorlage 6 am Boden des Reaktors und wird von dort mit einer Regeneratpumpe 12 in einen Sedimentationsbehälter zur Auftrennung in eine absetzende und in eine aufschwimmende Phase sowie in Klarwasser gepumpt. Um eine Grenzwertüberschreitung nach der Regenerierung zu vermeiden, wird die Vorlage 6 im Bodenbereich des Reaktors 1 vor Wiederaufnahme des Normalbetriebs nicht mit Rohwasser sondern mit gereinigtem Abwasser aus einer nachgeschalteten Grube angefüllt. Nach der Regenerierung übernehmen bis dahin weniger aktive Zellen aus dem unteren Bereich des Biofilms die Funktion der abgeriebenen oberen Zellschichten, so dass es nicht zu einem Leistungseinbruch kommt.

Durch Anwendung der vorliegenden Erfindung kann trotz des außerordentlich hohen Sauerstoffbedarfs und des starken Biomassewachstums sowie der Filtration eines großen Teils der abfiltrierbaren Stoffe ein stabil arbeitendes Verfahren mit sehr hoher Raumabbauleistung ohne energieintensive Belüftung des Wasserkörpers angeboten werden.

Mit der beschriebenen Anlage wird unter den oben genannten Bedingungen der geforderte Grenzwert von < 800 mg/l CSB stabil eingehalten.

### Bezugszeichenaufstellung

- 1: Reaktor
- 2: Aufwuchsträgermaterial
- 3: Rohwasser
- 4: Verteilung
- 5: Ablauf
- 6: Vorlage
- 7: Kreislaufpumpe
- 8: Ventilator
- 9: Luftaustritt
- 10: Siebboden
- 11: Gebläse
- 12: Regeneratpumpe

## Patentansprüche

1. Verfahren zur mikrobiologischen aeroben Abwasserbehandlung mit nachfolgenden Verfahrensschritten:
- das zu behandelnde Abwasser wird im oberen Teil eines nach oben offenen, nahezu drucklosen Reaktionsraums verteilt und durchrieselt eine nicht unter Wasser liegende Schüttung aus einem kleinkörnigen Aufwuchsträgermaterial für Mikroorganismen mit einer Dichte < 0,1 g/cm³ und einer Korngröße < 15 mm von oben nach unten,
- nach der Passage des Trägermaterials wird das Abwasser in einer Vorlage gefasst und teilweise im Kreislauf erneut von oben nach unten über die Trägermaterialschüttung gegeben,
- gleichzeitig wird die Trägermaterialschüttung in Gegenrichtung zum rieselnden Abwasser mit einem künstlich erzeugten Luftstrom < 100 m³/m² x h von unten nach oben durchströmt,
- in bestimmten Abständen findet eine Regenerierung statt, bei welcher die Trägermaterialschüttung in Gegenrichtung zum rieselnden Abwasser-Kreislaufstrom mit einem künstlich erzeugten Starkluftstrom von mehr als 150 m³/m² x h und einem Druck von mehr als 20 mbar/m Höhe der Trägermaterialschüttung von unten nach oben derart durchströmt und soweit verwirbelt wird, bis ein Teil der zwischen den einzelnen Trägerteilchen anhaftenden Biomasse sowie der aus dem Abwasser abfiltrierten feinen Feststoffe abgerieben werden,
- der Starkluftstrom wird während der Regenerierung in einem Regime aus mehreren kurzzeitigen Stößen zugeführt,
- anschließend werden Starkluftstrom und Wasserkreislauf unterbrochen und das danach aus der Trägermaterialschüttung abfließende Regenerat aus Abwasser und abgeriebener Biomasse wird aufgefangen und aus dem System entfernt.

2. Verfahren nach Anspruch 1, **dadurch gekennzeichnet, dass** der Luftstrom während der kontinuierlichen Abwasserbehandlung im Bereich zwischen 20 und 100 m³/m² x h liegt.

3. Verfahren nach den Ansprüchen 1 oder 2, **dadurch gekennzeichnet, dass** der Starkluftstrom während der Regenerierung zwischen 150 - 1000 m³/m² x h und mit einem Druck zwischen 20 - 200 mbar pro Meter Höhe der Trägermaterialschüttung eingestellt wird.

4. Verfahren nach einem der Ansprüche 1 bis 3, **dadurch gekennzeichnet, dass** die aus dem kontinuierlichen Abwasserzulauf und der zusätzlichen Kreislaufführung resultierende Geschwindigkeit des von oben nach unten rieselnden Abwassers im Bereich zwischen 3 - 15 m³/m² x h liegt.

5. Verfahren nach einem der Ansprüche 1 bis 4, **dadurch gekennzeichnet, dass** die Trägermaterialschüttung aus kugelförmigen Schaumpolystyren besteht.

6. Verfahren nach einem der Ansprüche 1 bis 5, **dadurch gekennzeichnet, dass** nach dem Regenerierbetrieb und dem anschließenden Abzug des Regenerates die Vorlage wieder aufgefüllt wird und dazu behandeltes Abwasser, welches während der kontinuierlichen Abwasserbehandlung gesammelt wurde, verwendet wird.

7. Verfahren nach einem der Ansprüche 1 bis 6, **dadurch gekennzeichnet, dass** die Regenerierung durch den Anstieg des Druckes unterhalb der Trägermaterialschüttung automatisch ausgelöst wird.

8. Verfahren nach einem der Ansprüche 1 bis 7, **dadurch gekennzeichnet, dass** während der Regenerierung der Zulauf von unbehandeltem Abwasser in den Reaktionsraum und der entsprechende Ablauf von behandeltem Abwasser aus dem Reaktionsraum abgeschaltet werden.

9. Verfahren nach einem der Ansprüche 1 bis 8, **dadurch gekennzeichnet, dass** die Trägermaterialschüttung auf der Oberfläche des Wasserkörpers schwimmt.

## Claims

1. Method for microbiological aerobic sewage treatment, having the following method steps:
- the sewage to be treated is distributed in the upper part of an upwardly open virtually pressureless reaction space and trickles through a heap not lying under water and consisting of a small-grained growth carrier material for microorganisms with a density < 0.1 g/cm³ and with a grain size < 15 mm from the top downwards,
- after passing through the carrier material, the sewage is trapped in a run-down tank and is partially circulated once again from the top downwards via the carrier material heap,
- simultaneously, an artificially generated air stream < 100 m³/m² × h flows from the bottom upwards through the carrier material heap in the opposite direction to the trickling sewage,
- at specific intervals, regeneration takes place, in which the carrier material heap has flown through it from the bottom upwards, in the opposite direction to the trickling circulating sewage stream, an artificially generated strong air stream of more than 150 m³/m² × h and a pressure of more than 20 mbar/m high to the carrier material heap and is swirled until part of the biomass, adhering between the individual carrier particles, and of the fine solids filtered off from the sewage is worn away,
- the strong air stream is supplied, during regeneration, in a regime consisting of a plurality of brief pulses,
- subsequently, the strong air stream and water circulation are interrupted, and the regenerate thereafter flowing out from the carrier material heap and consisting of sewage and worn-away biomass is intercepted and removed from the system.

2. Method according to Claim 1, **characterized in that** the air stream lies in the range of between 20 and 100 m³/m² × h during continuous sewage treatment.

3. Method according to either one of Claims 1 and 2, **characterized in that**, during regeneration, the strong air stream is set at between 150 and 1000 m³/m² × h and with a pressure of between 20 and 200 mbar per metre height of the carrier material heap.

4. Method according to one of Claims 1 to 3, **characterized in that** the velocity, resulting from continuous sewage inflow and additional circulation, of the sewage trickling from the top downwards lies in the range of between 3 and 15 m³/m² × h.

5. Method according to one of Claims 1 to 4, **characterized in that** the carrier material heap consists of spherical foam polystyrene.

6. Method according to one of Claims 1 to 5, **characterized in that**, after regenerating operation and subsequent take-off of the regenerate, the run-down tank is filled up again, and treated sewage which was collected during continuous sewage treatment is used for this purpose.

7. Method according to one of Claims 1 to 6, **characterized in that** regeneration is triggered automatically by the rise in pressure below the carrier material heap.

8. Method according to one of Claims 1 to 7, **characterized in that**, during regeneration, the inflow of untreated sewage into the reaction space and the corresponding run-off of treated sewage out of the reaction space are switched off.

9. Method according to one of Claims 1 to 8, **characterized in that** the carrier material heap floats on the surface of the body of water.

## Revendications

1. Procédé de traitement microbiologique aérobie d'une eau usée, comprenant les étapes de procédé suivantes :
- l'eau usée à traiter est répartie dans la partie supérieure d'une chambre de réaction ouverte vers le haut, presque sans pression, et ruisselle de haut en bas au travers d'un garnissage non situé sous l'eau d'un matériau support de la croissance pour microorganismes en petits grains, ayant une densité < 0,1 g/cm³ et une taille de grain < 15 mm,
- après le passage du matériau support, l'eau usée est recueillie dans un collecteur et en partie remise en circulation de haut en bas dans le garnissage de matériau support,
- simultanément, le garnissage de matériau support est traversé de bas en haut dans la direction opposée de l'eau usée ruisselante par un courant d'air généré artificiellement < 100 m³/m² x h,
- à des intervalles déterminés, une régénération a lieu, lors de laquelle le garnissage de matériau support est traversé de bas en haut dans la direction opposée du courant de circulation d'eau usée ruisselante par un courant d'air fort généré artificiellement supérieur à 150 m³/m² x h et une pression supérieure à 20 mbar/m de hauteur du garnissage de matériau support, et agité jusqu'à ce qu'une partie de la biomasse adhérant entre les particules supports individuelles et les solides fins filtrés de l'eau usée soient éliminés par abrasion,
- pendant la régénération, le courant d'air fort est introduit en un régime de plusieurs coups courts,
- le courant d'air fort et la circulation d'eau sont ensuite interrompus, et le régénérat d'eau usée et de biomasse éliminée par abrasion qui s'écoule ensuite du garnissage de matériau support est recueilli et évacué du système.

2. Procédé selon la revendication 1, **caractérisé en ce que** le courant d'air se situe entre 20 et 100 m³/m² x h pendant le traitement continu de l'eau usée.

3. Procédé selon la revendication 1 ou 2, **caractérisé en ce que** le courant d'air fort est ajusté pendant la régénération entre 150 et 1 000 m³/m² x h et avec une pression comprise entre 20 et 200 mbar par mètre de hauteur du garnissage de matériau support.

4. Procédé selon l'une quelconque des revendications 1 à 3, **caractérisé en ce que** la vitesse de l'eau usée ruisselante de haut en bas résultant de l'alimentation continue en eau usée et de la mise en circulation supplémentaire est comprise entre 3 et 15 m³/m² x h.

5. Procédé selon l'une quelconque des revendications 1 à 4, **caractérisé en ce que** le garnissage de matériau support est constitué de polystyrène expansé en forme de billes.

6. Procédé selon l'une quelconque des revendications 1 à 5, **caractérisé en ce qu'**après le fonctionnement en régénération et le soutirage ultérieur du régénérat, le collecteur est de nouveau rempli et, pour cela, de l'eau usée traitée, qui a été recueillie pendant le traitement continu de l'eau usée, est utilisée.

7. Procédé selon l'une quelconque des revendications 1 à 6, **caractérisé en ce que** la régénération est déclenchée automatiquement par l'élévation de la pression en dessous du garnissage de matériau support.

8. Procédé selon l'une quelconque des revendications 1 à 7, **caractérisé en ce que** pendant la régénération, l'alimentation en eau usée non traitée dans la chambre de réaction et le déchargement correspondant d'eau usée traitée de la chambre de réaction sont stoppés.

9. Procédé selon l'une quelconque des revendications 1 à 8, **caractérisé en ce que** le garnissage de matériau support flotte à la surface de la masse d'eau.
